# FASCICULE DE BREVET EUROPEEN

(11) **EP 3 488 165 B1**
(45) Date de publication et mention de la délivrance du brevet: **01.12.2021**
(21) Numéro de dépôt: 17745841.1
(22) Date de dépôt: 06.07.2017
(51) Int. Cl.: F25J 3/02, C01B 3/50

(54) **PROCÉDÉ DE SÉPARATION D'UN GAZ DE SYNTHÈSE**
VERFAHREN ZUR ABSCHEIDUNG EINES SYNTHESEGASES
METHOD FOR SEPARATING A SYNTHESIS GAS

(30) Priorité: 25.07.2016 FR 1657108
(43) Date de publication de la demande: 29.05.2019
(73) Titulaire: L'AIR LIQUIDE, Société Anonyme pour l'Etude et l'Exploitation des Procédés Georges Claude, 75007 Paris (FR)
(72) Inventeur: DEMOLLIENS, Bertrand, 75011 Paris (FR); HERNANDEZ, Antoine, 77340 Pontault Combault (FR); TSEVERY, Jean-Marc, 77127 Lieusaint (FR)
(74) Mandataire: Air Liquide
(86) Numéro de dépôt international: PCT/FR2017/051841
(87) Numéro de publication internationale: WO 2018/020095

(56) Documents cités:
- EP-A1- 1 479 990
- EP-A2- 2 565 154
- WO-A1-2012/076786
- WO-A2-2014/012629
- DE-A1-102007 027 819
- DE-A1-102007 059 543
- FR-A1- 2 838 424
- FR-A1- 2 861 165
- FR-A1- 2 969 136

## Description

La présente invention est relative à un procédé de séparation d'un gaz de synthèse. En particulier, le gaz de synthèse comprend du monoxyde de carbone et de l'hydrogène et éventuellement du méthane et/ou de l'azote et/ou de l'argon.

Un appareil de distillation cryogénique est alimenté en gaz de synthèse par d'une unité de génération de gaz de synthèse de type reformage ou/et oxydation partielle (SMR, ATR, POX, ...). Le gaz de synthèse en sortie du générateur est refroidi (pour la production de vapeur et divers préchauffes et éventuellement par de l'eau de refroidissement), puis envoyé vers un système d'extraction du CO₂ (typiquement par lavage aux amines tel que MEA, MDEA, aMDEA), puis séché avant d'être envoyé à l'appareil de distillation cryogénique pour séparation et purification du CO. Dans certains cas, notamment lorsque le gaz de synthèse est produit par une unité de génération par oxydation partielle produisant de l'acétylène, le gaz résiduaire dénommé AOG ou « acetylene offgas » en anglais constitue le gaz de synthèse. Il est comprimé avec un compresseur en amont de l'appareil de distillation cryogénique. La pression à laquelle ce gaz est comprimé est compatible avec la pression de produit riche en hydrogène requise. Ainsi, il n'est pas obligatoire de recomprimer l'hydrogène avant son transfert au client.

Généralement, quand l'unité qui consomme le CO est opérée à charge réduite, la partie génération de gaz de synthèse ne délivre que les molécules de CO demandées (pour ne pas dégrader les coûts opératoires et d'éviter le plus possible de mettre à la torche des produits CO et/ou H₂ excédentaires). L'appareil de distillation cryogénique va fonctionner à un faible régime, exprimé en rapport du débit de CO et/ou d'H₂ sur les débits de charge nominaux.

Ainsi, la stabilité de fonctionnement de l'appareil de distillation cryogénique à basse charge sur le long terme pose problème avec risques accrus de ne pas respecter la pureté demandée du CO ou d'avoir des débits de production trop fluctuants.

Afin d'assurer un fonctionnement stable de l'appareil de distillation cryogénique, il est nécessaire de l'opérer avec un débit de charge suffisant qui peut être supérieur aux besoins ponctuels des clients. Les coûts opératoires sont dégradés du fait de devoir opérer l'appareil de distillation cryogénique à un niveau de charge supérieur aux besoins des clients.

Lorsque l'unité de génération de gaz de synthèse s'arrête intempestivement, cela conduit à arrêter l'appareil de distillation cryogénique qui n'est plus alimenté en molécules de gaz de synthèse. Une fois que le gaz de synthèse est à nouveau disponible, une certaine durée (de l'ordre de plusieurs heures) est requise pour redémarrer avant d'être en mesure de produire à nouveau du CO à la pureté requise.

Ainsi, une coupure de quelques minutes sur l'unité de génération du gaz de synthèse entraîne une rupture de production de CO pendant plusieurs heures. Les clients en aval devront donc à leur tour arrêter leurs installations consommatrices de CO qui à leur tour devront être redémarrées.

La solution technique présentée ci-après permet donc d'empêcher des arrêts longs d'une installation industrielle engendrant des coûts élevés de non-production :le recyclage des fluides produits par l'appareil de distillation cryogénique à l'entrée de cet appareil (fonctionnant par exemple par lavage au méthane et/ou condensation partielle et/ou lavage au monoxyde de carbone) lors d'un fonctionnement à marche réduite ou lors d'arrêt de l'unité qui génère le gaz de synthèse.

Lors de la production de monoxyde de carbone et d'hydrogène à partir d'un gaz de synthèse généré par reformage ou oxydation partielle, on utilise généralement un appareil de distillation cryogénique et une unité d'adsorption. L'appareil de distillation cryogénique assure la purification du CO et la production d'un débit enrichi en hydrogène qui est ensuite épuré en hydrogène par adsorption.

La solution proposée est de recycler des gaz produits par l'appareil de distillation cryogénique, éventuellement tous les gaz produits par l'appareil de distillation cryogénique, en amont de l'appareil de distillation cryogénique et du compresseur de gaz de synthèse. Ainsi, les unités de séparation et le compresseur ne sont pas arrêtés et lorsque la source génératrice de gaz de synthèse revient en opération, il devient possible de traiter à nouveau le gaz de synthèse et de produire les produits requis.

Cette solution permet également d'assurer des descentes en charge jusqu'à 0% de la source sans arrêt au lieu de 40% typiquement.

DE-A-102007059543 décrit un procédé dans lequel en cas de baisse de charge en gaz de synthèse, des produits d'un procédé de séparation du gaz sont recyclés en aval de la source du gaz de synthèse et en amont d'une station de purification du gaz de synthèse, chacun des gaz recyclés étant comprimé par un compresseur dédié. Le gaz de synthèse n'est pas comprimé entre la source et la station de purification.

FR2861154 décrit un procédé où des produits d'une séparation cryogénique sont recyclés en amont de la séparation en cas de réduction du mélange à séparer.

FR2961136 décrit un procédé de séparation cryogénique d'un gaz de synthèse où les produits sont recyclés en utilisant des compresseurs dédiés.

La présente invention réduit le coût total de l'appareil, tout en éliminant la nécessité d'arrêter le compresseur de gaz de synthèse et de démarrer les compresseurs des produits.

Selon un objet de l'invention, il est prévu un procédé selon la revendication 1.

Selon un autre aspect de l'invention dans le procédé :
a) on stocke du gaz de synthèse comprimé pendant que le débit de gaz de synthèse provenant de la source est supérieur au seuil et
b) on envoie au moins une partie du gaz de synthèse comprimé et préalablement stocké ainsi qu'au moins une partie d'au moins chacun des trois premiers gaz de l'étape v) en aval de la source, et éventuellement en amont du compresseur, pour être purifiée dans l'unité de purification et séparés dans l'unité de séparation.

Selon d'autres aspects facultatifs de l'invention :
- en plus de l'au moins une partie de chacun des trois gaz de l'étape vi) on envoie au moins une partie d'au moins un des autres gaz de l'étape v) en aval de la source et en amont du compresseur uniquement si le débit de gaz de synthèse provenant de la source est inférieur au seuil, voire si aucun débit ne provient de la source.
- on envoie seulement x% du gaz enrichi en monoxyde de carbone, y% du gaz enrichi en hydrogène et z% du gaz résiduaire à l'unité de séparation quand le débit de gaz de synthèse provenant de la source est en dessous d'un seuil, x, y et z différant d'au plus 5%.
- on stocke une partie du gaz enrichi en monoxyde de carbone dans un stockage,
   et on envoie le reste du gaz enrichi en monoxyde de carbone à un client si le débit de gaz de synthèse provenant de la source est supérieur au seuil et on envoie du gaz enrichi en monoxyde de carbone provenant du stockage au client si le débit de gaz de synthèse provenant de la source est inférieur au seuil.
- si le débit de gaz de synthèse provenant de la source est inférieur au seuil, tout le gaz enrichi en monoxyde de carbone envoyé au client provient du stockage et éventuellement tout le gaz enrichi en monoxyde de carbone provenant directement de l'unité de séparation sans passer pas le stockage est envoyé en amont du compresseur et en aval de la source.
- le gaz de synthèse provenant de la source est un gaz résiduaire d'une unité de production d'acétylène.
- si le débit de gaz de synthèse provenant de la source est supérieur au seuil, on stocke une partie du gaz de synthèse dans un stockage et si le débit de gaz de synthèse est inférieur au seuil, on envoie du gaz de synthèse du stockage vers le compresseur.
- si le débit de gaz de synthèse provenant de la source est nul, l'unité de séparation est alimentée uniquement par des gaz produits par l'unité de séparation.
- on comprime le gaz enrichi en monoxyde de carbone dans un compresseur de produit et on l'envoie au client et si le débit de gaz de synthèse provenant de la source est inférieur au seuil et le débit de gaz enrichi en monoxyde de carbone à comprimer est inférieur à un autre seuil, on envoie de l'azote gazeux au compresseur de produit pour être comprimé avec le gaz enrichi en monoxyde de carbone.
- si le débit de gaz de synthèse provenant de la source est inférieur à un seuil, on envoie un gaz riche en un composant du gaz de synthèse provenant d'une autre source qui n'est pas l'appareil de séparation à l'unité de séparation.
- le gaz enrichi en monoxyde de carbone est comprimé dans un compresseur, ensuite divisé en deux, une partie comprimée servant de produit et une partie comprimée étant recyclé en aval de la source et/ou le gaz enrichi en hydrogène est comprimé dans un compresseur, ensuite divisé en deux, une partie comprimée servant de produit et une partie comprimée étant recyclé en aval de la source.
- uniquement si le débit de gaz de synthèse provenant de la source et envoyé au compresseur est inférieur à un seuil ou nul, on envoie tout le gaz enrichi en monoxyde de carbone en aval de la source et en amont du compresseur.
- uniquement si le débit de gaz de synthèse provenant de la source et envoyé au compresseur est inférieur à un seuil ou nul, on envoie tout le gaz enrichi en hydrogène en aval de la source et en amont du compresseur.
- uniquement si le débit de gaz de synthèse provenant de la source et envoyé au compresseur est inférieur à un seuil ou nul, on envoie tout le gaz résiduaire contenant du monoxyde de carbone et de l'hydrogène en aval de la source, et en amont du compresseur.
- le gaz résiduaire contient du méthane et éventuellement de l'azote et/ou de l'argon.
- le pourcentage total d'hydrogène et de monoxyde de carbone dans le gaz résiduaire est inférieur à 98% mol.
- les au moins une partie de chacun des trois gaz suivants :le gaz enrichi en monoxyde de carbone, le gaz enrichi en hydrogène et le gaz résiduaire contenant du monoxyde de carbone et de l'hydrogène sont comprimées uniquement dans le compresseur.

En particulier, dans le cas où le gaz de synthèse est comprimé en amont de l'appareil de distillation cryogénique par un compresseur (comme par exemple lorsque le gaz de synthèse est constitué d'un flux de résiduaire (le dénommé « Acetylene Offgas ») d'une unité produisant de l'acétylène), on utilise le compresseur de gaz de synthèse pour recycler les fluides produits par l'appareil de distillation cryogénique afin de :
1) Maintenir un débit suffisant vers l'appareil de distillation cryogénique en complément du débit de gaz de synthèse produit par l'unité amont et être en mesure de produire un débit de CO inférieur au minimum technique de l'appareil de distillation cryogénique.
2) Maintenir l'appareil de distillation cryogénique en fonctionnement y compris lors d'arrêt de l'unité produisant le gaz de synthèse, dans ce cas l'appareil de distillation cryogénique sera alimentée uniquement par les gaz recyclés, le temps que le gaz de synthèse produit par l'unité en amont soit à nouveau disponible.
   - Afin d'assurer la fourniture du client en CO pendant le temps où le gaz de synthèse n'est pas disponible on ajoutera un stockage liquide de molécules de CO dans l'appareil de distillation cryogénique. Ce CO sera vaporisé pendant la durée de coupure d'alimentation de l'appareil de distillation cryogénique.
   - Pour compenser le temps de démarrage de la vaporisation, on pourra ajouter une capacité tampon de CO gazeux. En effet, les gaz produits par l'appareil de distillation cryogénique seront alors recyclés et le gaz requis par le client proviendra alors de cette capacité tampon installée en amont de la vanne de contrôle sur la ligne de production de CO et sera opérée à une pression supérieure à la pression requise par l'unité qui consomme le CO.
   - Pour compenser le temps de l'ouverture des vannes des tuyaux de recyclage, on pourra ajouter une capacité tampon à haute pression qui sera alimentée par la sortie du compresseur d'AOG et qui sera connectée à l'aspiration du compresseur. Cette capacité tampon pourra donc compenser les premières secondes du cas transitoire de fermeture de la vanne et également les très légères fuites au niveau du compresseur et/ou du système d'extraction du CO₂.
   - De l'azote pourra éventuellement être injecté à l'aspiration du compresseur de CO pour contrebalancer les fuites au niveau du compresseur. On préférera néanmoins compenser les pertes du compresseur de CO par l'appoint de molécules extérieures provenant d'une capacité tampon de CO gazeux de la capacité liquide de CO.

En effet, ajouter de l'azote dégrade la qualité du CO produit.

Ces idées combinées permettent de toujours maintenir un débit de production de CO vers le client y compris lors d'arrêt de courte durée de l'unité de génération de gaz de synthèse et apporte ainsi une fiabilisation de l'installation pour le client final en lissant les coupures de fournitures de l'installation de génération de gaz de synthèse.

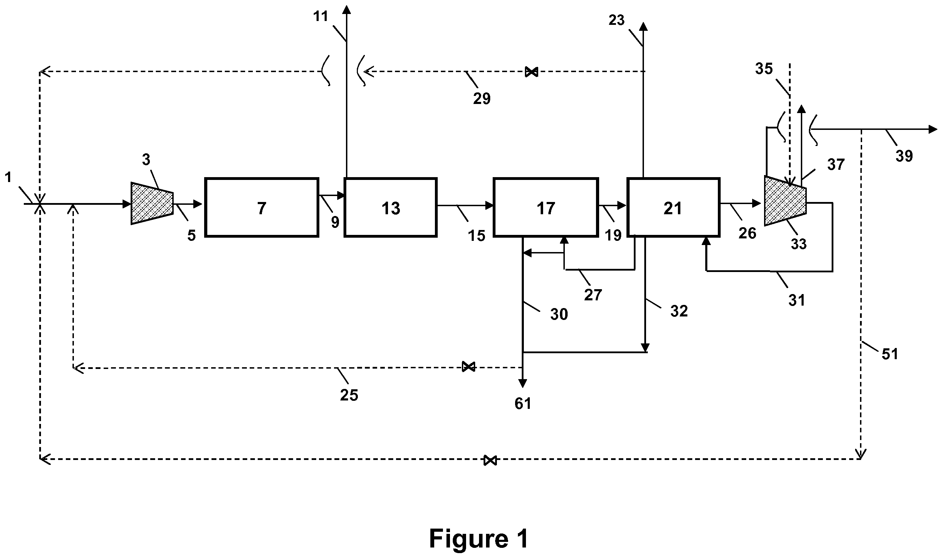

L'invention sera décrite en plus de détail en se référant aux Figures 1 à 3 qui représentent des procédés selon l'invention.

Dans la Figure 1, un gaz de synthèse 1 provient d'une unité de génération de gaz de synthèse, par exemple, une unité de reformage, tel qu'un SMR ou un ATR ou une unité d'oxydation partielle, qui produit par exemple de l'acétylène. Le gaz de synthèse 1 contient du monoxyde de carbone, du dioxyde de carbone, de l'hydrogène et éventuellement du méthane et de l'azote.

Le gaz 1 est comprimé par un compresseur 3 pour former un gaz comprimé 5. Le gaz comprimé 5 est envoyé dans une unité de traitement 7 par hydrogénation pour enlever l'oxygène et les hydrocarbures insaturés en produisant un débit 9. Le débit 9 est envoyé à une unité d'épuration en CO₂ 13, par exemple par lavage aux amines produisant un débit de purge riche en CO₂ 11 et un débit de gaz de synthèse appauvri en CO₂ 15. Le débit 15 est envoyé à une unité d'épuration en CO₂ par adsorption 17 pour enlevant le CO₂ restant. Le gaz de synthèse épuré en CO₂ 19 est envoyé à une unité de distillation cryogénique 21 où le gaz de synthèse est refroidi et puis séparé dans au moins une colonne de distillation, comprenant par exemple une étape de lavage au méthane et/ou condensation partielle et/ou lavage au monoxyde de carbone.

L'unité de distillation cryogénique 21 produit un débit gazeux enrichi en monoxyde de carbone 26, un gaz riche en hydrogène 27 et un gaz résiduaire 23 contenant du monoxyde de carbone et de l'hydrogène, moins pur en monoxyde de carbone que le gaz 26 et moins pur en hydrogène que le gaz 27. Le gaz résiduaire 23 contient de préférence du méthane et éventuellement de l'azote et/ou de l'argon. De préférence le pourcentage total d'hydrogène et de monoxyde de carbone dans le gaz résiduaire est inférieur à 98% mol.

Le débit gazeux enrichi en monoxyde de carbone 26 est comprimé dans un compresseur 33. Un débit gazeux 31 venant de la sortie du compresseur 33 est renvoyé à l'unité de distillation cryogénique 21. Le débit 37 représente des pertes des gaz enrichis en monoxyde de carbone du compresseur 33. Le gaz venant d'un étage intermédiaire du compresseur 33 forme en partie 39 un produit.

Si le débit de gaz de synthèse provenant de la source de gaz de synthèse est nul, la totalité de ces trois produits 23, 27, 39 est renvoyée à la purification. Les gaz 23, 39 et 27 doivent être envoyés en amont du compresseur 3.

Si le débit de gaz de synthèse provenant de la source n'est pas nul mais est inférieur à un seuil, un pourcentage de x% du gaz riche en monoxyde de carbone, y% du gaz riche en hydrogène et z% du gaz résiduaire peuvent être renvoyés à l'unité de purification et ensuite à la séparation cryogénique. Les pourcentages x, y and z sont de préférence identiques mais peuvent différer de moins de 5%.

Quand au moins une partie du monoxyde de carbone du compresseur 33 est recyclée, on peut injecter de l'azote gazeux 35 à un niveau intermédiaire ou à l'aspiration du compresseur 33 pour compenser les fuites du compresseur.

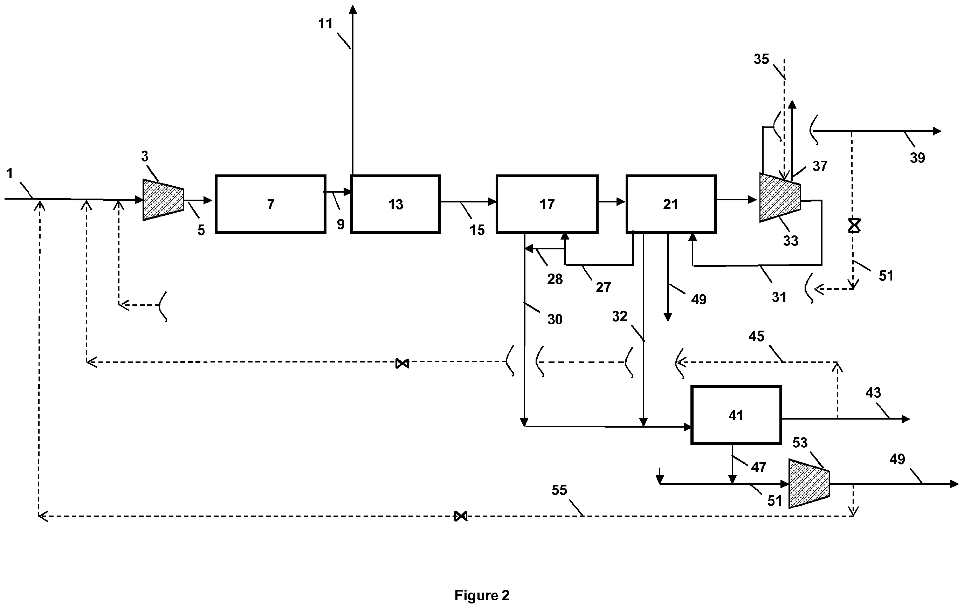

La Figure 2 diffère de la Figure 1 en ce que le débit 30 enrichi en hydrogène est envoyé de l'unité 17 d'adsorption qui enlève l'eau et le CO₂ à un appareil de purification par adsorption 41. Cet appareil 41 produit un gaz riche en hydrogène 43.

Le gaz appauvri en hydrogène 47 venant de l'appareil 41 est mélangé avec le résiduaire 49 de l'appareil 21 et comprimé dans un compresseur 53 pour fournir un gaz résiduaire sous pression.

Ainsi si le gaz de synthèse 1 provenant de la source n'est plus produit ou est produit en quantité réduite, on recycle au moins certains produits de l'appareil de distillation cryogénique 21 en amont du compresseur 3, éventuellement après une étape supplémentaire de traitement. En plus du reste 51 du gaz de l'étage intermédiaire du compresseur 33 ou à la place du gaz 51, on recycle en amont du compresseur 3 au moins une partie 45 du produit riche en hydrogène 43 et au moins une partie 55 du gaz résiduaire provenant du compresseur 53. Le gaz résiduaire 55 contient de préférence du méthane et éventuellement de l'azote et/ou de l'argon. De préférence le pourcentage total d'hydrogène et de monoxyde de carbone dans le gaz résiduaire est inférieur à 98% mol.

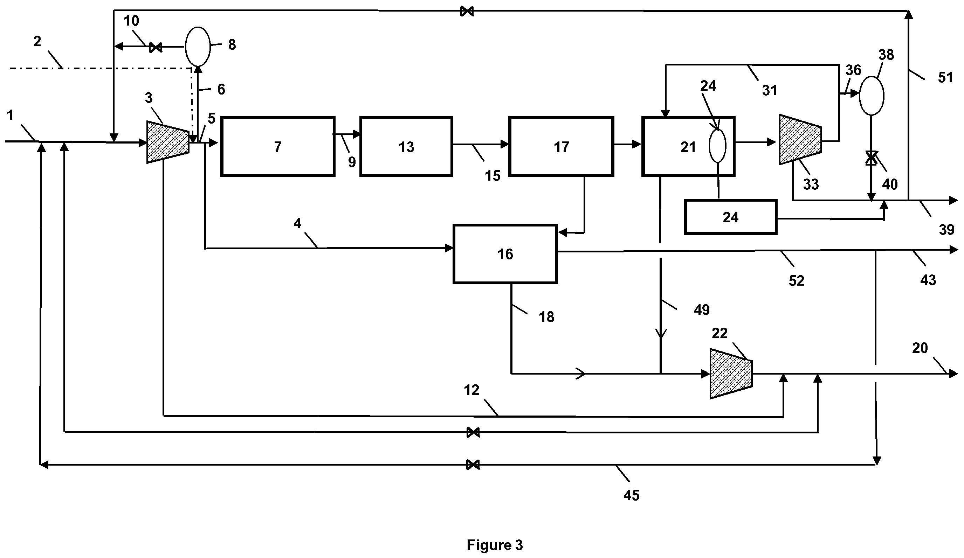

La Figure 3 diffère de la Figure 1 en ce qu'une partie 4 du gaz de synthèse est prise à une pression intermédiaire du compresseur 3 pour la partie 4 et à la pression finale de celui-ci pour la partie 4 et ne sont pas traitées dans les unités 7, 13, 17, 21. La partie 4 est envoyée de la pression finale du compresseur 3 à une unité de séparation par adsorption appelée PSA 16 où elle est épurée pour former un débit riche en hydrogène 52. Le résiduaire 18 de l'unité de séparation par adsorption 16 appauvri en hydrogène est mélangé avec le gaz résiduaire 49 de l'appareil cryogénique 21 et le mélange est comprimé dans un compresseur 22 pour former un carburant gazeux 20. La partie 12 de gaz de synthèse peut être mélangée avec le carburant gazeux 20.

Si le gaz de synthèse 1 provenant de la source n'est plus produit ou est produit en quantité réduite, en dessous d'un seuil, on recycle au moins les trois gaz suivants et en aval de la source du gaz de synthèse et éventuellement vers l'amont du compresseur 3 :
i) Au moins une partie 51 du gaz enrichi en monoxyde de carbone 39 provenant de l'appareil de distillation cryogénique 21.
ii) Au moins une partie 45 du gaz enrichi en hydrogène provenant de l'unité de séparation par adsorption 16.
iii) Au moins une partie 14 d'un gaz résiduaire contenant de l'hydrogène et/ou du monoxyde de carbone provenant de l'appareil de distillation cryogénique et/ou de l'unité de séparation par adsorption 16, moins pur en monoxyde de carbone que le gaz 51 et moins pur en hydrogène que le gaz 45 et éventuellement aussi
iv) Une partie 6 du gaz de synthèse comprimé prise en aval du compresseur 3, stockée dans un stockage 8 pendant que le débit de gaz de synthèse est supérieur au seuil et renvoyée via la conduite 10 et une vanne.

Le gaz résiduaire 14 contient de préférence du méthane et éventuellement de l'azote et/ou de l'argon. De préférence le pourcentage total d'hydrogène et de monoxyde de carbone dans le gaz résiduaire est inférieur à 98% mol.

De préférence les pourcentages des gaz recyclés diffèrent peu pour reconstituer le gaz de synthèse en mélangeant les différents produits 45, 51, 14.

Afin de s'assurer qu'il y a suffisamment de monoxyde de carbone pour le client, on peut utiliser une capacité de monoxyde de carbone liquide 24 au sein de l'appareil de distillation 21 et/ou une capacité de monoxyde de carbone gazeux 38 alimentée à partir du compresseur 33 par la conduite 36 pour fournir le monoxyde de carbone qui manque. Le liquide du stockage 24 est vaporisé dans le vaporiseur 25.

En particulier, si une grande partie ou tout le monoxyde de carbone produit en temps réel est destiné au recyclage, le monoxyde de carbone stocké dans les capacités 24 ou 38 peut permettre d'alimenter le client. Ainsi, par exemple, on ouvrira la vanne 40 pour fournir du monoxyde de carbone du stockage 38 vers le client si le gaz de synthèse 1 vient à manquer.

Dans une variante préférée, qui peut être utilisée sur tous les procédés des Figures 1 à 3 en utilisant les conduites présentes ou en rajoutant les stockages requis, le recyclage est effectué de la manière suivante.

Dans un premier temps, le débit de gaz de synthèse tombe en dessous d'un seuil ou s'arrête. Tout d'abord, on commence à ouvrir des vannes de recyclage sur au moins deux fluides produits en traitant le gaz de synthèse.

Le gaz de synthèse est recyclé du stockage 8 (ou de la conduite en aval du compresseur 3 si son volume et sa pression le permettent) vers l'amont du compresseur 3.

Une fois que les vannes de recyclage sont ouvertes, on recycle au moins les trois gaz suivants en aval de la source du gaz de synthèse et éventuellement vers l'amont du compresseur 3 :
i) Au moins une partie 51 du gaz enrichi en monoxyde de carbone 39 provenant de l'appareil de distillation cryogénique 21.
ii) Au moins une partie 45 du gaz enrichi en hydrogène provenant de l'unité de séparation par adsorption 16.
iii) Au moins une partie 14 d'un gaz résiduaire contenant de l'hydrogène et/ou du monoxyde de carbone provenant de l'appareil de distillation cryogénique et/ou de l'unité de séparation par adsorption 16, moins pur en monoxyde de carbone que le gaz 51 et moins pur en hydrogène que le gaz 45 et éventuellement aussi
iv) Une partie 6 du gaz de synthèse comprimé prise en aval du compresseur 3, stockée dans un stockage 8 pendant que le débit de gaz de synthèse est supérieur au seuil et renvoyée via la conduite 10 et une vanne.

Dans certains cas, toute la production de l'appareil de séparation constitué par l'appareil de séparation par lavage et/ou distillation et éventuellement par l'unité d'adsorption est recyclée en amont du compresseur de gaz de synthèse.

Il est également possible pour toutes les figures de recycler le gaz enrichi en monoxyde de carbone 51 en aval du compresseur de gaz de synthèse 3. Le gaz 51 peut dans ce cas être pris à la pression de sortie du compresseur 3.

Il est également possible de recycler au moins trois produits et d'envoyer également un gaz 2 riche en un composant du gaz de synthèse provenant d'une source extérieure, autre que l'appareil de séparation, vers l'amont ou l'aval du compresseur de gaz de synthèse. Ce gaz 2 peut être du gaz naturel provenant d'une canalisation ou un gaz de synthèse d'une autre source.

## Revendications

1. Procédé de séparation d'un gaz de synthèse contenant du monoxyde de carbone et de l'hydrogène dans lequel :
i) on comprime un débit de gaz de synthèse (1) provenant d'une source de gaz de synthèse dans un compresseur (3),
ii) on purifie le gaz de synthèse comprimé (15) dans une unité de purification (17) pour l'épurer en eau et/ou en dioxyde de carbone,
iii) on refroidit le débit de gaz de synthèse comprimé et purifié,
iv) on sépare le débit de gaz de synthèse refroidi par lavage et/ou distillation à une température cryogénique et éventuellement par adsorption dans une unité de séparation (16, 21, 41), et
v) on produit dans l'unité de séparation au moins les trois gaz suivants : un gaz enrichi en monoxyde de carbone (26), un gaz enrichi en hydrogène (43), un gaz résiduaire contenant du monoxyde de carbone et de l'hydrogène (32,47) moins pur en monoxyde de carbone que le gaz enrichi en monoxyde de carbone et moins pur en hydrogène que le gaz enrichi en hydrogène et éventuellement aussi un gaz enrichi en méthane, et/ou un gaz enrichi en azote, et
vi) uniquement si le débit de gaz de synthèse provenant de la source et envoyé au compresseur est inférieur à un seuil ou nul, on envoie au moins une partie de chacun des trois gaz suivants :le gaz enrichi en monoxyde de carbone (26), le gaz enrichi en hydrogène (43) et le gaz résiduaire contenant du monoxyde de carbone et de l'hydrogène (23, 49) en aval de la source, pour être purifiés dans l'unité de purification et séparés dans l'unité de séparation, les au moins une partie des trois gaz étant envoyés en amont du compresseur pour être comprimés dans le compresseur en amont de la purification.

2. Procédé selon la revendication 1 dans lequel :
a) on stocke du gaz de synthèse comprimé (6) pendant que le débit de gaz de synthèse provenant de la source est supérieur au seuil, et
b) on envoie au moins une partie du gaz de synthèse comprimé et préalablement stocké ainsi qu'au moins une partie d'au moins chacun des trois premiers gaz de l'étape v) en aval de la source, et éventuellement en amont du compresseur, pour être purifiée dans l'unité de purification et séparés dans l'unité de séparation.

3. Procédé selon la revendication 1 ou 2 dans lequel en plus de l'au moins une partie de chacun des trois gaz de l'étape vi) on envoie au moins une partie d'au moins un des autres gaz (26, 23, 43, 49) de l'étape v) en aval de la source et en amont du compresseur (3) uniquement si le débit de gaz de synthèse (1) provenant de la source est inférieur au seuil, voire si aucun débit ne provient de la source.

4. Procédé selon l'une des revendications précédentes dans lequel on envoie seulement x% du gaz enrichi en monoxyde de carbone, y% du gaz enrichi en hydrogène et z% du gaz résiduaire à l'unité de séparation (16, 21, 41) quand le débit de gaz de synthèse (1) provenant de la source est en dessous d'un seuil, x, y et z différant d'au plus 5%.

5. Procédé selon l'une des revendications précédentes dans lequel on stocke une partie (36) du gaz enrichi en monoxyde de carbone dans un stockage (38) et on envoie le reste du gaz enrichi en monoxyde de carbone à un client si le débit de gaz de synthèse (1) provenant de la source est supérieur au seuil et on envoie du gaz enrichi en monoxyde de carbone provenant du stockage au client si le débit de gaz de synthèse est inférieur au seuil.

6. Procédé selon la revendication 5 dans lequel si le débit de gaz de synthèse (1) provenant de la source est inférieur au seuil, tout le gaz enrichi en monoxyde de carbone envoyé au client provient du stockage (38) et éventuellement tout le gaz enrichi en monoxyde de carbone provenant directement de l'unité de séparation (16, 21, 41) sans passer pas le stockage (38) est envoyé en amont du compresseur (3) et en aval de la source.

7. Procédé selon une des revendications précédentes dans lequel le gaz de synthèse (1) est un gaz résiduaire d'une unité de production d'acétylène.

8. Procédé selon l'une des revendications précédentes dans lequel si le débit de gaz de synthèse (1) provenant de la source est supérieur au seuil, on stocke une partie du gaz de synthèse dans un stockage (8) et si le débit de gaz de synthèse (1) provenant de la source est inférieur au seuil, on envoie du gaz de synthèse du stockage vers le compresseur (3).

9. Procédé selon l'une des revendications précédentes dans lequel si le débit de gaz de synthèse (1) provenant de la source est nul, l'unité de séparation (16, 21, 41) est alimentée uniquement par des gaz produits par l'unité de séparation.

10. Procédé selon l'une des revendications précédentes dans lequel on comprime le gaz enrichi en monoxyde de carbone dans un compresseur de produit (33) et on l'envoie au client et si le débit de gaz de synthèse (1) provenant de la source est inférieur au seuil et le débit de gaz enrichi en monoxyde de carbone à comprimer est inférieur à un autre seuil, on envoie de l'azote gazeux (35) au compresseur de produit pour être comprimé avec le gaz enrichi en monoxyde de carbone.

11. Procédé selon l'une des revendications précédentes 1 à 8 ou 10 dans lequel si le débit de gaz de synthèse (1) provenant de la source est inférieur à un seuil, on envoie un gaz riche en un composant du gaz de synthèse (2) provenant d'une autre source qui n'est pas l'unité de séparation à l'unité de séparation (16, 21, 41).

12. Procédé selon l'une des revendications précédentes dans lequel le gaz enrichi en monoxyde de carbone (26) est comprimé dans un compresseur de produit (33), ensuite divisé en deux, une partie comprimée (39) servant de produit et une partie comprimée (51) étant recyclée en aval de la source et/ou le gaz enrichi en hydrogène est comprimé dans un compresseur de produit (22), ensuite divisé en deux, une partie comprimée servant de produit (20) et une partie comprimée (14) étant recyclée en aval de la source (43).

13. Procédé selon l'une des revendications précédentes dans lequel le gaz résiduaire (23, 49) contient du méthane et éventuellement de l'azote et/ou de l'argon.

14. Procédé selon l'une des revendications précédentes dans lequel le pourcentage total d'hydrogène et de monoxyde de carbone dans le gaz résiduaire (32, 47) est inférieur à 98% mol.

15. Procédé selon l'une des revendications précédentes dans lequel les au moins une partie de chacun des trois gaz suivants : le gaz enrichi en monoxyde de carbone (26), le gaz enrichi en hydrogène (43) et le gaz résiduaire contenant du monoxyde de carbone et de l'hydrogène (23, 49) sont comprimées uniquement dans le compresseur (3).

## Patentansprüche

1. Verfahren zur Trennung eines Synthesegases, das Kohlenmonoxid und Wasserstoff enthält, wobei:
i) ein Strom Synthesegas (1) aus einer Synthesegasquelle in einem Verdichter (3) verdichtet wird,
ii) das verdichtete Synthesegas (15) in einer Reinigungseinheit (17) gereinigt wird, um es von Wasser und/oder Kohlendioxid zu reinigen,
iii) der verdichtete und gereinigte Synthesegasstrom gekühlt wird,
iv) der gekühlte Synthesegasstrom durch Waschen und/oder Destillation bei einer Tieftemperatur und gegebenenfalls durch Adsorption in einer Trenneinheit (16, 21, 41) getrennt wird, und
v) in der Trenneinheit mindestens die drei folgenden Gase erzeugt werden: ein mit Kohlenmonoxid (26) angereichertes Gas, ein mit Wasserstoff (43) angereichertes Gas, ein Restgas, das Kohlenmonoxid und Wasserstoff (32, 47) enthält und dabei weniger Kohlenmonoxid als das mit Kohlenmonoxid angereicherte Gas und weniger Wasserstoff als das mit Wasserstoff angereicherte Gas aufweist, und gegebenenfalls auch ein mit Methan angereichertes Gas und/oder ein mit Stickstoff angereichertes Gas, und
vi) ausschließlich, wenn der Durchsatz des Synthesegases aus der Quelle, das zum Verdichter geleitet wird, unter einem Schwellenwert oder bei null liegt, mindestens eine Teilmenge von jedem der drei folgenden Gase: das mit Kohlenmonoxid (26) angereicherte Gas, das mit Wasserstoff (43) angereicherte Gas und das Restgas, das Kohlenmonoxid und Wasserstoff (23, 49) enthält, hinter die Quelle geleitet wird, damit sie in der Reinigungseinheit gereinigt und in der Trenneinheit getrennt werden, wobei die mindestens eine Teilmenge der drei Gase vor den Verdichter geleitet wird, damit sie in Strömungsrichtung vor der Reinigung im Verdichter verdichtet werden.

2. Verfahren nach Anspruch 1, wobei:
a) verdichtetes Synthesegas (6) gespeichert wird, während der Durchsatz des Synthesegases aus der Quelle über dem Schwellenwert liegt, und
b) mindestens eine Teilmenge des verdichteten und zuvor gespeicherten Synthesegases sowie mindestens eine Teilmenge von mindestens jedem der drei ersten Gase von Schritt v) hinter die Quelle und gegebenenfalls vor den Verdichter geleitet wird, damit sie in der Reinigungseinheit gereinigt und in der Trenneinheit getrennt wird.

3. Verfahren nach Anspruch 1 oder 2, wobei zusätzlich zu der mindestens einen Teilmenge von jedem der drei Gase von Schritt vi) mindestens eine Teilmenge von mindestens einem der weiteren Gase (26, 23, 43, 49) von Schritt v) ausschließlich dann hinter die Quelle und vor den Verdichter (3) geleitet wird, wenn der Durchsatz des Synthesegases (1) aus der Quelle unter dem Schwellenwert liegt, oder sogar, wenn keinerlei Strom aus der Quelle kommt.

4. Verfahren nach einem der vorhergehenden Ansprüche, wobei lediglich x% des mit Kohlenmonoxid angereicherten Gases, y% des mit Wasserstoff angereicherten Gases und z% des Restgases zur Trenneinheit (16, 21, 41) geleitet werden, wenn der Durchsatz des Synthesegases (1) aus der Quelle unter einem Schwellenwert liegt, wobei sich x, y und z um höchstens 5% unterscheiden.

5. Verfahren nach einem der vorhergehenden Ansprüche, wobei eine Teilmenge (36) des mit Kohlenmonoxid angereicherten Gases in einem Speicher (38) gespeichert wird und der Rest des mit Kohlenmonoxid angereicherten Gases zu einem Abnehmer geleitet wird, wenn der Durchsatz des Synthesegases (1) aus der Quelle über dem Schwellenwert liegt, und das mit Kohlenmonoxid angereicherte Gas aus dem Speicher zu dem Abnehmer geleitet wird, wenn der Durchsatz des Synthesegases unter dem Schwellenwert liegt.

6. Verfahren nach Anspruch 5, wobei, wenn der Durchsatz des Synthesegases (1) aus der Quelle unter dem Schwellenwert liegt, das gesamte mit Kohlenmonoxid angereicherte Gas, das zu dem Abnehmer geleitet wird, aus dem Speicher (38) kommt, und gegebenenfalls das gesamte mit Kohlenmonoxid angereicherte Gas, das unmittelbar aus der Trenneinheit (16, 21, 41) kommt, ohne über den Speicher (38) zu strömen, vor den Verdichter (3) und hinter die Quelle geleitet wird.

7. Verfahren nach einem der vorhergehenden Ansprüche, wobei das Synthesegas (1) ein Restgas aus einer Einheit zur Herstellung von Acetylen ist.

8. Verfahren nach einem der vorhergehenden Ansprüche, wobei, wenn der Durchsatz des Synthesegases (1) aus der Quelle über dem Schwellenwert liegt, eine Teilmenge des Synthesegases in einem Speicher (8) gespeichert wird, und wenn der Durchsatz des Synthesegases (1) aus der Quelle unter dem Schwellenwert liegt, Synthesegas aus dem Speicher zum Verdichter (3) geleitet wird.

9. Verfahren nach einem der vorhergehenden Ansprüche, wobei, wenn der Durchsatz des Synthesegases (1) null beträgt, der Trenneinheit (16, 21, 41) nur Gase zugeführt werden, die von der Trenneinheit erzeugt werden.

10. Verfahren nach einem der vorhergehenden Ansprüche, wobei das mit Kohlenmonoxid angereicherte Gas in einem Produktverdichter (33) verdichtet wird und zu dem Abnehmer geleitet wird, und wenn der Durchsatz des Synthesegases (1) aus der Quelle unter dem Schwellenwert liegt und der Durchsatz des zu verdichtenden mit Kohlenmonoxid angereicherten Gases unter einem weiteren Schwellenwert liegt, gasförmiger Stickstoff (35) zum Produktverdichter geleitet wird, damit er mit dem mit Kohlenmonoxid angereicherten Gas verdichtet wird.

11. Verfahren nach einem der vorhergehenden Ansprüche 1 bis 8 oder 10, wobei, wenn der Durchsatz des Synthesegases (1) aus der Quelle unter einem Schwellenwert liegt, ein Gas mit einem hohen Gehalt an einem Bestandteil des Synthesegases (2) aus einer anderen Quelle, bei der es sich nicht um die Trenneinheit handelt, zur Trenneinheit (16, 21, 41) geleitet wird.

12. Verfahren nach einem der vorhergehenden Ansprüche, wobei das mit Kohlenmonoxid (26) angereicherte Gas in einem Produktverdichter (33) verdichtet, anschließend halbiert wird, wobei eine verdichtete Teilmenge (39) als Produkt dient und eine verdichtete Teilmenge (51) hinter der Quelle zurückgeführt wird und/oder das mit Wasserstoff angereicherte Gas in einem Produktverdichter (22) verdichtet, anschließend halbiert wird, wobei eine verdichtete Teilmenge als Produkt (20) dient und eine verdichtete Teilmenge (14) hinter der Quelle (43) zurückgeführt wird.

13. Verfahren nach einem der vorhergehenden Ansprüche, wobei das Restgas (23, 49) Methan und gegebenenfalls Stickstoff und/oder Argon enthält.

14. Verfahren nach einem der vorhergehenden Ansprüche, wobei der Gesamtprozentanteil an Wasserstoff und Kohlenmonoxid im Restgas (32, 47) unter 98 Mol-% liegt.

15. Verfahren nach einem der vorhergehenden Ansprüche, wobei die oder zumindest eine Teilmenge von jedem der drei folgenden Gase: mit Kohlenmonoxid angereichertes Gas (26), mit Wasserstoff angereichertes Gas (43) und das Restgas, das Kohlenmonoxid und Wasserstoff (23, 49) enthält, ausschließlich im Verdichter (3) verdichtet wird bzw. werden.

## Claims

1. Method for separating a synthesis gas containing carbon monoxide and hydrogen in which:
i) a flow of synthesis gas (1) received from a source of synthesis gas is compressed in a compressor (3),
ii) the compressed synthesis gas (15) is purified in a purification unit (17) to purify it of water and/or carbon dioxide,
iii) the compressed and purified flow of synthesis gas is cooled,
iv) the cooled flow of synthesis gas is separated by washing and/or distillation at a cryogenic temperature and optionally by adsorption in a separating unit (16, 21, 41), and
v) at least the following three gases are produced in the separating unit: a carbon monoxide-enriched gas (26), a hydrogen-enriched gas (43), a residual gas containing carbon monoxide and hydrogen (32, 47) that is less pure with respect to carbon monoxide than the carbon monoxide-enriched gas and less pure with respect to hydrogen than the hydrogen-enriched gas and optionally also a methane-enriched gas, and/or a nitrogen-enriched gas,
and
vi) only if the flow of synthesis gas received from the source and sent to the compressor is below a threshold or zero, at least one part of each of the following three gases: the carbon monoxide-enriched gas (26), the hydrogen-enriched gas (43) and the residual gas containing carbon monoxide and hydrogen (23, 49) is sent downstream of the source, to be purified in the purification unit and separated in the separating unit, the at least one part of the three gases being sent upstream of the compressor to be compressed in the compressor upstream of the purification.

2. Method according to Claim 1 in which:
a) compressed synthesis gas (6) is stored while the flow of synthesis gas received from the source is above the threshold, and
b) at least one part of the compressed synthesis gas, previously stored, as well as at least one part of at least each of the first three gases in step v), are sent downstream of the source, and optionally upstream of the compressor, to be purified in the purification unit and separated in the separating unit.

3. Method according to Claim 1 or 2 in which, in addition to the at least one part of each of the three gases in step vi), at least one part of at least one of the other gases (26, 23, 43, 49) in step v) is sent downstream of the source and upstream of the compressor (3) only if the flow of synthesis gas (1) received from the source is below the threshold, or even if no flow is received from the source.

4. Method according to one of the preceding claims in which only x% of the carbon monoxide-enriched gas, y% of the hydrogen-enriched gas and z% of the residual gas are sent to the separating unit (16, 21, 41) when the flow of synthesis gas (1) received from the source is below a threshold, x, y and z differing by at most 5%.

5. Method according to one of the preceding claims in which a part (36) of the carbon monoxide-enriched gas is stored in a storage facility (38) and the rest of the carbon monoxide-enriched gas is sent to a customer if the flow of synthesis gas (1) received from the source is above the threshold and the carbon monoxide-enriched gas received from the storage facility is sent to the customer if the flow of synthesis gas is below the threshold.

6. Method according to Claim 5 in which if the flow of synthesis gas (1) received from the source is below the threshold, all the carbon monoxide-enriched gas sent to the customer comes from the storage facility (38) and optionally all the carbon monoxide-enriched gas received directly from the separating unit (16, 21, 41) without passing through the storage facility (38) is sent upstream of the compressor (3) and downstream of the source.

7. Method according to one of the preceding claims in which the synthesis gas (1) is a residual gas from an acetylene production unit.

8. Method according to one of the preceding claims in which if the flow of synthesis gas (1) received from the source is above the threshold, part of the synthesis gas is stored in a storage facility (8) and if the flow of synthesis gas (1) received from the source is below the threshold, synthesis gas is sent from the storage facility to the compressor (3).

9. Method according to one of the preceding claims in which if the flow of synthesis gas (1) received from the source is zero, the separating unit (16, 21, 41) is only supplied with gases produced by the separating unit.

10. Method according to one of the preceding claims in which the carbon monoxide-enriched gas is compressed in a product compressor (33) and is sent to the customer and if the flow of synthesis gas (1) received from the source is below the threshold and the flow of carbon monoxide-enriched gas to be compressed is below another threshold, gaseous nitrogen (35) is sent to the product compressor to be compressed with the carbon monoxide-enriched gas.

11. Method according to one of the preceding Claims 1 to 8 or 10 in which if the flow of synthesis gas (1) received from the source is below a threshold, a gas rich in a component of the synthesis gas (2) received from another source, which is not the separating unit, is sent to the separating unit (16, 21, 41).

12. Method according to one of the preceding claims in which the carbon monoxide-enriched gas (26) is compressed in a product compressor (33), then split into two, one compressed part (39) serving as a product and one compressed part (51) being recycled downstream of the source and/or the hydrogen-enriched gas is compressed in a product compressor (22), then split into two, one compressed part serving as a product (20) and one compressed part (14) being recycled downstream of the source (43).

13. Method according to one of the preceding claims in which the residual gas (23, 49) contains methane and optionally nitrogen and/or argon.

14. Method according to one of the preceding claims in which the total percentage of hydrogen and carbon monoxide in the residual gas (32, 47) is below 98 mol%.

15. Method according to one of the preceding claims in which the at least one part of each of the following three gases: the carbon monoxide-enriched gas (26), the hydrogen-enriched gas (43) and the residual gas containing carbon monoxide and hydrogen (23, 49) are only compressed in the compressor (3).
